# EUROPEAN PATENT SPECIFICATION

(11) **EP 4 431 742 B1**
(45) Date of publication and mention of the grant of the patent: **20.05.2026**
(21) Application number: 24163434.4
(22) Date of filing: 14.03.2024
(51) Int. Cl.: F04C 2/10, F04C 15/00, F04D 29/10, F04D 29/70

(54) **IMPROVED LIQUID PUMP**
VERBESSERTE FLÜSSIGKEITSPUMPE
POMPE À LIQUIDE AMÉLIORÉE

(30) Priority: 16.03.2023 IT 202300004992
(43) Date of publication of application: 18.09.2024
(73) Proprietor: Fluid-O-Tech S.r.l., 20094 Corsico (MI) (IT)
(72) Inventor: ANDREIS, Diego, 20094 Corsico (MI) (IT); BUTERA, Francesco, 20094 Corsico (MI) (IT); DAL BORGO, Filippo Maria, 20094 Corsico (MI) (IT)
(74) Representative: Bianchetti & Minoja with Trevisan & Cuonzo IPS SRL

(56) References cited:
- DE-A1- 10 333 564
- DE-A1- 102014 104 067
- GB-A- 853 811
- SE-L- 8 603 085
- US-A- 4 437 821

## Description

### FIELD OF THE INVENTION

The present invention relates to an improved liquid pump, particularly for food-grade liquids, such as milk, or biological liquids in general.

The present invention constitutes an improvement aimed at facilitating the cleaning of ducts and chambers within the pump itself, as well as improving its hygiene, particularly in applications in the food sector and the medical sector.

### STATE OF THE ART

As is well known, pumps for pumping liquids have at least one rotating pumping member comprising a respective shaft, driven by a motor. The rotating pumping member is housed inside the pump casing, in a special pump chamber, while the drive shaft passes through the pump casing to connect to the motor outside the pump casing. The at least one rotating member may be, for example, an impeller, in the case of centrifugal pumps, or a pair of gears, in the case of gear pumps (internal or external). In any case, to prevent leakage of the pumped liquid along the drive shaft, at least one seal is generally fitted onto the drive shaft itself, inside the pump casing.

However, these pumps of the known type have certain drawbacks, including the fact that there are often dead areas between suction and delivery, where there is little or no flow of the pumped liquid, where the stagnation thereof can thus occur. In particular, the configuration of pumps of the known type is generally such that the aforementioned dead areas are created in the vicinity of the seals fitted onto the drive shaft. In the case of applications in the food and/or medical sector, where the pumped liquid is a food-grade or biological liquid, stagnation phenomena are not only undesirable, but also seriously harmful. In fact, the stagnation of food-grade or biological liquids not only leads to a deterioration in pump and/or seal performance, but also poses serious hygiene and bacterial proliferation risks.

Today, pump flushing cycles are known to be performed, particularly in the food and medical sectors. However, precisely because of the configuration of known pumps, the flushing liquid also tends to stagnate in the dead areas, and in particular near the seals fitted onto the drive shaft. Consequently, the cleaning of pumps of the known type by means of flushing cycles does not take place efficiently and still does not guarantee the proper cleaning of the dead areas.

DE102014104067A1 discloses a liquid pump for beverage dispensers according to the preamble of claim 1.

US4437821A, DE10333564A1 and GB853811A disclose other examples of liquid pumps.

### SUMMARY OF THE INVENTION

In light of the above, it is the scope of the present invention to realise an improved liquid pump that exceeds the limits of the prior art and is easily and efficiently cleaned.

Within this scope, it is the object of the present invention to realise an improved liquid pump that guarantees high levels of hygiene, particularly in the case of applications in the food and medical sector.

Another object of the present invention is to guarantee proper operating maintenance of the seals, so that the sealing performance of the liquid remains unchanged over time.

A further object of the invention consists of making an improved liquid pump that is capable of providing the broadest guarantees of reliability and safety when used.

Yet another object of the invention is to provide a pump that is easy to make and economically competitive in its operation and maintenance.

The task disclosed above, and also the objects mentioned and others which are more apparent below, are achieved by an improved liquid pump according to claim 1.

Other features are provided in the dependent claims.

### LIST OF FIGURES

Further characteristics and advantages of the present invention will become more apparent from the exemplary but non-limiting description of three preferred embodiments of the present invention illustrated with the aid of the attached drawings in which:
- Figure 1 is a plan view from above of a first embodiment of an improved liquid pump according to the invention;
- Figure 2 shows the liquid pump in Figure 1, with the pump cover removed;
- Figure 3 is a first cross-sectional view of the liquid pump in Figure 1;
- Figure 4 is a second cross-sectional view of the liquid pump in Figure 1;
- Figure 5 is a plan view from above of a second embodiment of an improved liquid pump according to the invention;
- Figure 6 shows the liquid pump in Figure 5, with the pump cover removed;
- Figure 7 is a first cross-sectional view of the liquid pump in Figure 5;
- Figure 8 is a second cross-sectional view of the liquid pump in Figure 5;
- Figure 9 is a plan view from above of a third embodiment of an improved liquid pump according to the invention;
- Figure 10 shows the liquid pump in Figure 9, with the pump cover removed;
- Figure 11 is a first cross-sectional view of the liquid pump in Figure 9;
- Figure 12 is a second cross-sectional view of the liquid pump in Figure 9.

### DETAILED DESCRIPTION OF THE INVENTION

With particular reference to the figures, the improved liquid pump, referred to overall by reference numeral 1, comprises at least one rotating pumping member 2, 3 and a drive shaft 4 rigidly constrained to said at least one rotating pumping member 2 and configured to drive said at least one rotating pumping member 2 into rotation. The at least one rotating pumping member 2, 3 is completely housed in a pumping chamber 6 formed inside the pump casing 7. The drive shaft 4 is partially housed inside the pump casing 7. At least one liquid-tight seal 8 is arranged between the drive shaft 4 and the pump casing 7, which prevents the liquid from leaking along the drive shaft 4, itself, to the outside of the pump casing 7. The pump 1 also comprises a suction duct 9 in liquid communication with pumping chamber 6, and a delivery duct 11 in liquid communication with the pumping chamber 6.

According to the invention, a flushing chamber 13 in liquid communication with the suction duct 9 or delivery duct 11 is formed inside the pump casing 7. The drive shaft 4 passes through the flushing chamber 13 and the at least one seal 8 has at least one portion 80 facing the flushing chamber 13 so that the flow of liquid running inside the flushing chamber 13 laps the portion 80 of the seal 8.

In this way, when the pump 1 is operating, the portion 80 of seal 8 facing the flushing chamber 13 is constantly hit by the flow of pumped liquid. Consequently, the sealing area of the drive shaft 4 is not a so-called dead area, where the liquid tends to stagnate, but is an area characterised by a constant presence of liquid flow.

The pump casing 7 preferably comprises a base casing 75, and a cover 76. As illustrated in the accompanying figures, the pumping chamber 6 is located inside the base casing 75 and is closed at the top by the cover 76. The flushing chamber 13, on the other hand, is housed in the base casing 75.

According to the invention, the suction duct 9 (or the delivery duct 11) which is in direct liquid communication with the flushing chamber 13 has a main extension direction 90 (or 110). The flushing chamber 13 is arranged inside the pump casing 7, aligned with said main extension direction 90 (or 110) of the suction duct 9 (or the delivery duct 11). In this way, the flow of pumped liquid hits and flows through the flushing chamber 13 itself along a preferential main flow direction.

As illustrated in the accompanying figures, the flushing chamber 13 is defined by a volume comprised between an upper base and a lower base. The main extension direction 90 (or 110) of the suction duct 9 (or of the delivery duct 11) preferably lies in a plane interposed between the upper base and lower base of the flushing chamber 13 volume. More preferably, the upper base, the lower base and the plane in which the main extension direction 90 (or 110) of the suction duct 9 (or the delivery duct 11) lies are parallel to each other.

The improved liquid pump 1 may be a positive displacement pump or a centrifugal pump.

For example, the pump 1 may be a positive displacement pump with internal or external gears, or a positive displacement pump with lobes, or even a positive displacement pump with vanes.

In all of the above cases, the pump 1 comprises at least one rotating pumping member 2, 3 driven by means of a respective drive shaft 4. In the case of a positive displacement pump with gears or lobes, there is a driven rotating pumping member 2 and an idle rotating pumping member 3.

In the case of a centrifugal pump, the rotating pumping member may comprise an impeller, or a turbine, fitted onto the drive shaft, or made as one piece with the drive shaft.

Preferably, as illustrated in the examples of the three embodiments of an improved liquid pump 1, the pump 1 is a positive displacement pump with external gears, comprising a pair of rotating pumping members 2, 3 consisting of a pair of toothed wheels 21, 31. A first driven toothed wheel 21 is fitted onto or made as a single piece with the drive shaft 4, while a second idle toothed wheel 41 is driven in rotation by the first toothed wheel 21, and is fitted onto or made as a single piece with an idle rotation shaft 32, preferably fully housed within the pump casing 7.

Preferably the seal 8 is a lip seal. Alternatively, the seal 8 may also be an O-ring type seal.

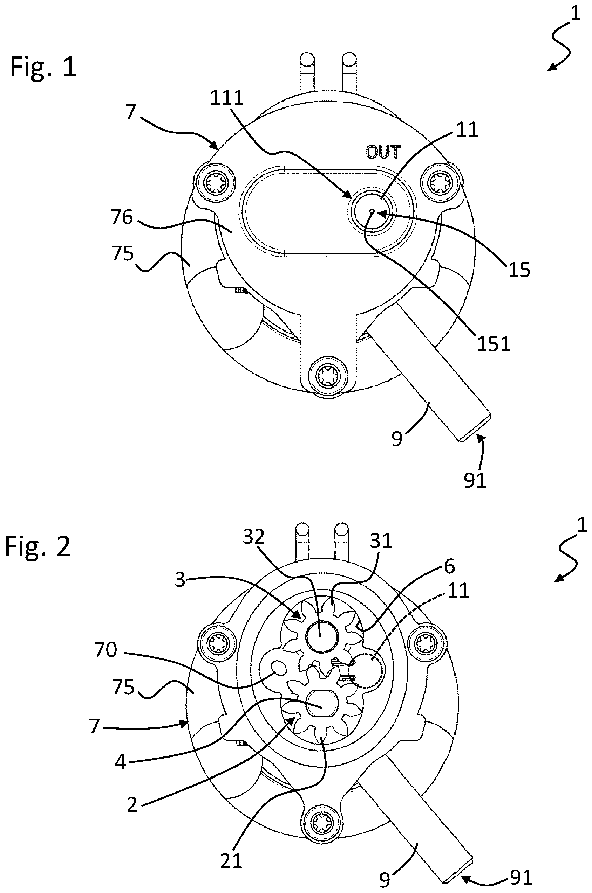

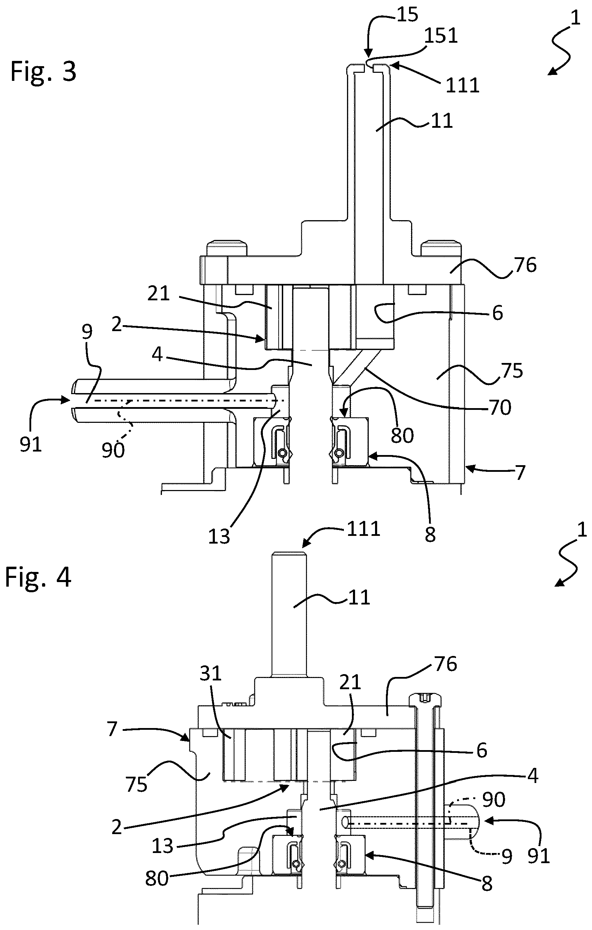

With reference to the first embodiment of the pump 1, illustrated in Figures 1 to 4, the flushing chamber 13 is arranged upstream of the pumping chamber 6, in direct liquid communication with the suction duct 9.

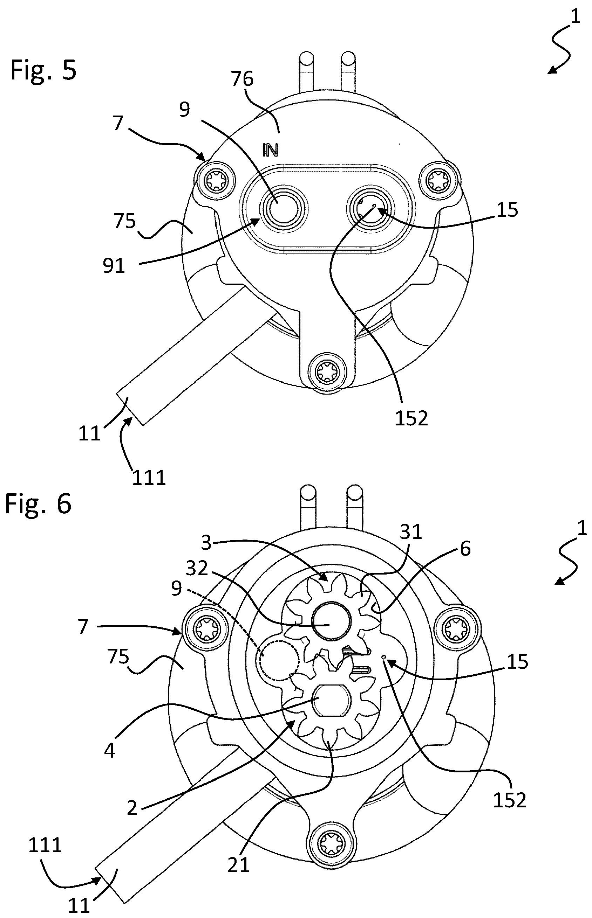

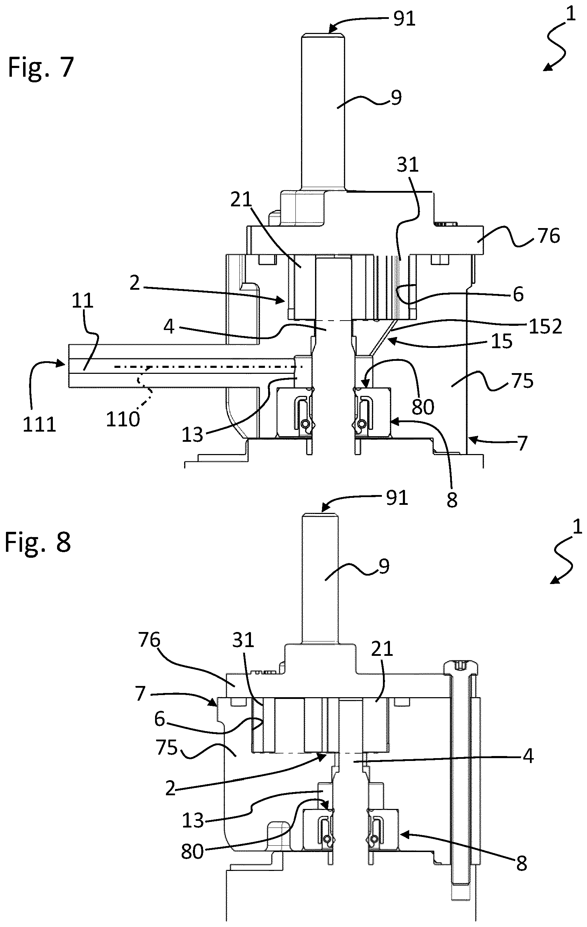

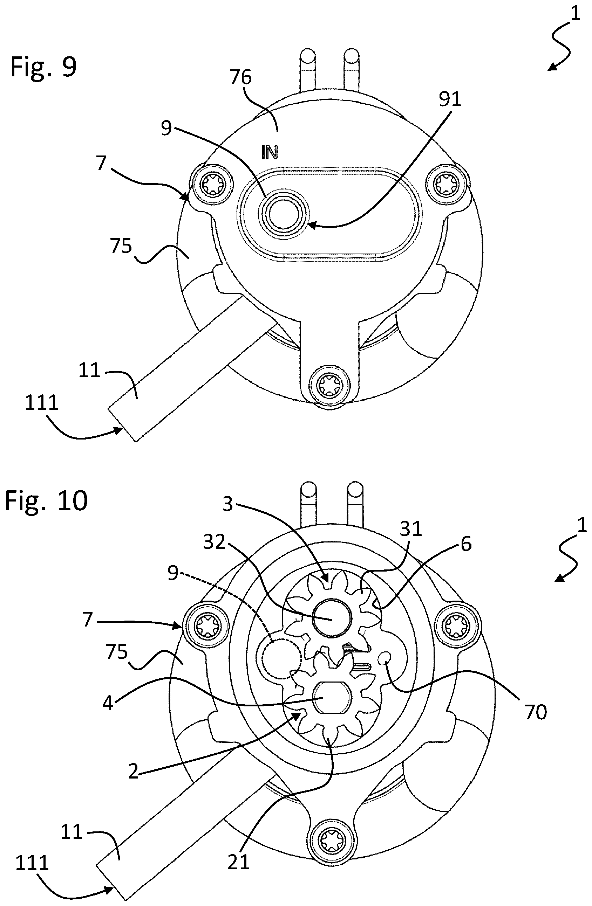

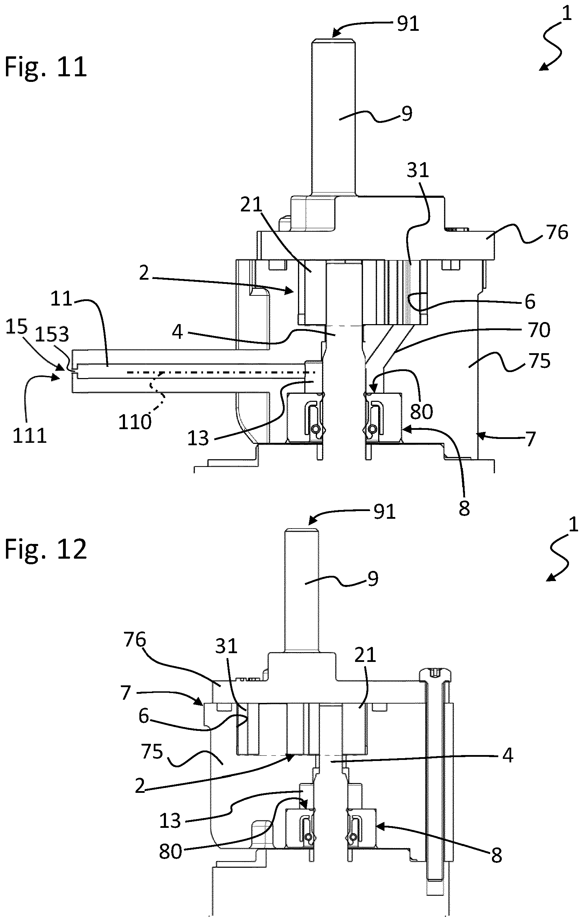

With reference to the second embodiment of the pump 1, illustrated in Figures 5 to 8, and also with reference to the third embodiment of the pump 1, illustrated in Figures 9 to 12, the flushing chamber 13 is arranged downstream of the pumping chamber 6, in direct liquid communication with the delivery duct 11.

Preferably, the improved liquid pump 1 comprises a suction mouth 91, in liquid communication with the suction duct 9, and a delivery mouth 111, in liquid communication with the delivery duct 11. In at least one point along the liquid path within the pump 1, between the suction mouth 91 and the delivery mouth 111, the pump 1 comprises at least one restriction 15 configured to generate an emulsion of the liquid passing through said at least one restriction 15.

Advantageously, the improved liquid pump 1 is a pump for emulsifying milk, and this restriction 15 is configured to generate a milk emulsion.

Preferably, as illustrated in Figures 1 to 4 with reference to the first embodiment of the pump 1, and in Figures 9 to 12 with reference to the third embodiment, the restriction 15 consists of an emulsion orifice 151, 153 formed at the delivery mouth 111.

Preferably the emulsion orifice 151, 153 has a diameter less than 1.5 mm, and more preferably less than 1.0 mm. For example, the diameter of the emulsion orifice 151, 153 may be about 0.7 mm.

Advantageously, in the case of the first embodiment of the pump 1, the flushing chamber 13, being located upstream of the pumping chamber 6, on the suction side, is traversed by low-pressure liquid and therefore the seal 8 is a low-pressure seal.

In the case of the third embodiment of the pump 1, however, the flushing chamber 13 is located downstream of the pumping chamber 6, on the delivery side, and upstream of the restriction 15. The flushing chamber 13 is therefore traversed by high-pressure liquid and consequently the seal 8 is a high-pressure seal.

Alternatively, as illustrated in Figures 5 to 8 with reference to the second embodiment of the pump 1, the restriction 15 consists of a duct with a reduced cross-section 152 formed within the pump casing 7 between the flushing chamber 13 and the pumping chamber 6.

Preferably the reduced cross-section duct 152 has a diameter of less than 1.5 mm, and more preferably less than 1.0 mm. For example, the diameter of the reduced cross-section duct 152 may be about 0.7 mm.

Preferably the flushing chamber 13 is arranged downstream of the pumping chamber 6 but also downstream of the restriction 15. In this case, therefore, the flushing chamber 13 is traversed by low-pressure liquid and consequently the seal 8 is a low-pressure seal.

In particular, in the case of the second embodiment of the pump 1, although the flushing chamber 13 is located downstream of the pumping chamber 6, i.e. on the delivery side, but also being located downstream of the reduced cross-section duct 152, it is traversed by low-pressure liquid and therefore the seal 8 may be a low-pressure seal.

As illustrated in the accompanying figures, the pumping chamber 6 and the flushing chamber 13 are in liquid communication with each other via a duct 70, 152 formed inside the pump casing 7.

In the course of normal operation of the improved liquid pump 1, the liquid being pumped through the flushing chamber 13 laps the portion 80 of the seal 8 facing this flushing chamber 13 in a constant manner and with an adequate flow rate, thus preventing the formation of liquid stagnation zones at the seal 8 itself. Therefore, even during normal operation of the pump 1, the seal 8 is constantly rinsed by the liquid itself being pumped, which prevents the deposit and formation of unwanted and harmful residues.

In addition, as the pump 1 is in any case subjected from time to time to washing and/or sterilisation cycles with special washing liquids, such as liquid detergents, the configuration of the washing chamber 13 is such that the sealing area at the seal 8 is washed and cleaned very effectively by this washing liquid, as there are no dead or stagnation areas in the pump 1 which even the flushing liquid struggles to reach, or which it reaches at minimum flow rates, which are not sufficient to guarantee proper cleaning.

The improved liquid pump 1 can also advantageously be used to emulsify milk, thanks to the presence of the emulsion restriction 15.

In practice, it has been found that the improved liquid pump according to the present invention fulfils the task as well as the intended objects as it prevents the stagnation of liquid inside and is therefore easily and effectively cleaned.

Another advantage of the improved liquid pump, according to the invention, is that it ensures high levels of hygiene, particularly for applications in the food and medical sectors.

A further advantage of the pump according to the invention is that it can also be used in the food industry to emulsify milk. As is well known, milk is a highly perishable biological liquid, very prone to bacterial proliferation. The pump according to the invention therefore achieves the dual advantage of being able to process milk, emulsifying it with high efficiency, while also ensuring very high levels of hygiene and cleanliness.

The improved liquid pump thus conceived can undergo several modifications and variants within the scope of the invention as defined in the appended claims.

In practice, any materials can be used according to requirements, as long as they are compatible with the specific use, the dimensions and the contingent shapes.

## Claims

1. A liquid pump (1) comprising at least one rotating pumping member (2, 3) and a drive shaft (4) rigidly constrained to said at least one rotating pumping member (2) and configured to drive said at least one rotating pumping member (2) into rotation, said at least one rotating pumping member (2, 3) being completely housed in a pumping chamber (6) formed within a pump casing (7), said drive shaft (4) being partially housed within said pump casing (7), between said drive shaft (4) and said pump casing (7) there being provided at least one liquid-tight seal (8) for preventing leakage of said liquid along said drive shaft (4), said pump (1) comprising a suction duct (9) in liquid communication with said pumping chamber (6) and a delivery duct (11) in liquid communication with said pumping chamber (6), wherein inside said pump casing (7) a flushing chamber (13) is formed in liquid communication with said suction duct (9) or with said delivery duct (11), said drive shaft (4) passing through said flushing chamber (13), **characterised in that** said suction duct (9), or said delivery duct (11), which is in direct liquid communication with said flushing chamber (13), has a main extension direction (90 or 110), said flushing chamber (13) being arranged within said pump casing (7) aligned with said main extension direction (90 or 110) of said suction duct (9) or of said delivery duct (11), said at least one seal (8) having at least one portion (80) facing said flushing chamber (13) so that the flow of said liquid running inside said flushing chamber (13) laps said portion (80) of said seal (8).

2. Pump (1), according to the preceding claim, **characterised in that** it is a gear a pump (1), wherein said at least one rotating pumping member (2, 3) comprises a first toothed wheel (21) rigidly constrained to said drive shaft (4) and a second toothed wheel (31) geared to said first toothed wheel (21) and adapted to be driven into rotation by said first toothed wheel (21).

3. Pump (1), according to one or more of claims 1 to 2, wherein said flushing chamber (13) is arranged upstream of said pumping chamber (6), in direct liquid communication with said suction duct (9).

4. Pump (1), according to one or more of claims 1 to 2, wherein said flushing chamber (13) is arranged downstream of said pumping chamber (6), in direct liquid communication with said delivery duct (11).

5. Pump (1) according to one or more of the preceding claims, comprising a suction mouth (91), in liquid communication with said suction duct (9), and a delivery mouth (111), in liquid communication with said delivery duct (11), in at least one point along the liquid path within said pump (1), between said suction mouth (91) and said delivery mouth (111), said pump (1) comprising at least one restriction (15) configured to generate an emulsion of the liquid passing through said at least one restriction (15).

6. Pump (1), according to the preceding claim, **characterised in that** it is a pump for emulsifying milk and **in that** said at least one restriction (15) is configured to generate a milk emulsion.

7. Pump (1), according to claim 5 or 6, wherein said at least one restriction (15) consists of an emulsion orifice (151, 153) formed at said delivery mouth (111).

8. Pump (1), according to claim 5 or 6, wherein said at least one restriction (15) consists of a reduced cross-section duct (152) formed within said pump casing (7) between said flushing chamber (13) and said pumping chamber (6).

9. Pump (1) according to claim 7 or according to claim 8 wherein said emulsion orifice (151, 153) or said reduced cross-section duct (152) has a diameter of less than 1.5 mm, preferably less than 1.0 mm and more preferably 0.7 mm.

10. Pump (1), according to one or more of claims 5 to 9, wherein said flushing chamber (13) is arranged downstream of said pumping chamber (6) and downstream of said restriction (15), said seal (8) being a low-pressure seal.

11. Pump (1), according to one or more of the preceding claims, wherein said pumping chamber (6) and said flushing chamber (13) are in liquid communication with each other by means of a duct (70, 152) formed within said pump casing (7).

## Patentansprüche

1. Flüssigkeitspumpe (1), die mindestens ein rotierendes Pumpenelement (2, 3) und eine Antriebswelle (4) umfasst, die fest mit dem mindestens einen rotierenden Pumpenelement (2) verbunden und so konfiguriert ist, dass sie das mindestens eine rotierende Pumpenelement (2) in Drehung versetzt, wobei das mindestens eine rotierende Pumpenelement (2, 3) vollständig in einer innerhalb eines Pumpengehäuses (7) gebildeten Pumpenkammer (6) untergebracht ist, wobei die Antriebswelle (4) teilweise innerhalb des Pumpengehäuses (7) untergebracht ist und zwischen der Antriebswelle (4) und dem Pumpengehäuse (7) mindestens eine flüssigkeitsdichte Dichtung (8) bereitgestellt ist, um ein Austreten der Flüssigkeit entlang der Antriebswelle (4) zu verhindern, wobei die Pumpe (1) einen Saugkanal (9) in Flüssigkeitsverbindung mit der Pumpenkammer (6) und einen Druckkanal (11) in Flüssigkeitsverbindung mit der Pumpenkammer (6) umfasst, wobei innerhalb des Pumpengehäuses (7) eine Spülkammer (13) gebildet wird in Flüssigkeitsverbindung mit dem Saugkanal (9) oder mit dem Druckkanal (11) steht, wobei die Antriebswelle (4) durch die Spülkammer (13) geht, **dadurch gekennzeichnet, dass** der Saugkanal (9) oder der Druckkanal (11), der in direkter Flüssigkeitsverbindung mit der Spülkammer (13) steht, eine Haupterstreckungsrichtung (90 oder 110) aufweist, wobei die Spülkammer (13) innerhalb des Pumpengehäuses (7) ausgerichtet ist, das mit der Haupterstreckungsrichtung (90 oder 110) des Saugkanals (9) oder des Druckkanals (11) ausgerichtet ist, wobei die mindestens eine Dichtung (8) mindestens einen Abschnitt (80) aufweist, der der Spülkammer (13) zugewandt ist, so dass der innerhalb der Spülkammer (13) strömende Flüssigkeitsstrom den Abschnitt (80) der Dichtung (8) umspült.

2. Pumpe (1) nach dem vorhergehenden Anspruch, **dadurch gekennzeichnet, dass** es sich um eine Zahnradpumpe (1) handelt, wobei das mindestens eine rotierende Pumpenelement (2, 3) ein erstes Zahnrad (21), das starr mit der Antriebswelle (4) verbunden ist, und ein zweites Zahnrad (31) umfasst, das mit dem ersten Zahnrad (21) verzahnt ist und durch das erste Zahnrad (21) in Drehung versetzt werden kann.

3. Pumpe (1) nach einem oder mehreren der Ansprüche 1 bis 2, wobei die Spülkammer (13) stromaufwärts von der Pumpenkammer (6) in direkter Flüssigkeitsverbindung mit dem Saugkanal (9) angeordnet ist.

4. Pumpe (1) nach einem oder mehreren der Ansprüche 1 bis 2, wobei die Spülkammer (13) stromabwärts der Pumpenkammer (6) in direkter Flüssigkeitsverbindung mit dem Druckkanal (11) angeordnet ist.

5. Pumpe (1) nach einem oder mehreren der vorstehenden Ansprüche, umfassend eine Ansaugöffnung (91), die in Flüssigkeitsverbindung mit dem Ansaugkanal (9) steht, und eine Auslassöffnung (111), die in Flüssigkeitsverbindung mit dem Auslasskanal (11) steht, an mindestens einer Stelle entlang des Flüssigkeitswegs innerhalb der Pumpe (1), zwischen der Ansaugöffnung (91) und der Auslassöffnung (111), wobei die Pumpe (1) mindestens eine Verengung (15) umfasst, die konfiguriert ist, um eine Emulsion der durch die mindestens eine Verengung (15) durchgehenden Flüssigkeit zu erzeugen.

6. Pumpe (1) nach dem vorhergehenden Anspruch, **dadurch gekennzeichnet, dass** es sich um eine Pumpe zum Emulgieren von Milch handelt und dass die mindestens eine Verengung (15) so konfiguriert ist, dass sie eine Milchemulsion erzeugt.

7. Pumpe (1) nach Anspruch 5 oder 6, wobei die mindestens eine Verengung (15) aus einer Emulsionsöffnung (151, 153) besteht, die an der Auslassöffnung (111) ausgebildet ist.

8. Pumpe (1) nach Anspruch 5 oder 6, wobei die mindestens eine Verengung (15) aus einem Kanal (152) mit reduziertem Querschnitt besteht, der innerhalb des Pumpengehäuses (7) zwischen der Spülkammer (13) und der Pumpkammer (6) ausgebildet ist.

9. Pumpe (1) nach Anspruch 7 oder nach Anspruch 8, wobei die Emulsionsöffnung (151, 153) oder der Kanal (152) mit reduziertem Querschnitt einen Durchmesser von weniger als 1,5 mm, vorzugsweise weniger als 1,0 mm und besonders bevorzugt 0,7 mm aufweist.

10. Pumpe (1) nach einem oder mehreren der Ansprüche 5 bis 9, wobei die Spülkammer (13) stromabwärts der Pumpenkammer (6) und stromabwärts der Verengung (15) angeordnet ist und die Dichtung (8) eine Niederdruckdichtung ist.

11. Pumpe (1) nach einem oder mehreren der vorangehenden Ansprüche, wobei die Pumpenkammer (6) und die Spülkammer (13) mittels eines im Pumpengehäuse (7) ausgebildeten Kanals (70, 152) in Flüssigkeitsverbindung miteinander stehen.

## Revendications

1. Pompe à liquide (1) comprenant au moins un élément de pompage rotatif (2, 3) et un arbre d'entraînement (4) contraint de manière rigide audit au moins un élément de pompage rotatif (2) et configuré pour entraîner ledit au moins un élément de pompage rotatif (2) en rotation, ledit au moins un élément de pompage rotatif (2, 3) étant entièrement logé dans une chambre de pompage (6) formée à l'intérieur d'un corps de pompe (7), ledit arbre d'entraînement (4) étant partiellement logé dans ledit corps de pompe (7), entre ledit arbre d'entraînement (4) et ledit corps de pompe (7) étant prévu au moins un joint étanche au liquide (8) pour empêcher la fuite dudit liquide le long dudit arbre d'entraînement (4), ladite pompe (1) comprenant un conduit d'aspiration (9) en communication liquide avec ladite chambre de pompage (6) et un conduit de refoulement (11) en communication liquide avec ladite chambre de pompage (6), dans lequel, à l'intérieur dudit corps de pompe (7), est formée une chambre de rinçage (13) en communication liquide avec ledit conduit d'aspiration (9) ou avec ledit conduit de refoulement (11), ledit arbre d'entraînement (4) traversant ladite chambre de rinçage (13), **caractérisée en ce que** ledit conduit d'aspiration (9), ou ledit conduit de refoulement (11), qui est en communication liquide directe avec ladite chambre de rinçage (13), a une direction d'extension principale (90 ou 110), ladite chambre de rinçage (13) étant disposée à l'intérieur dudit corps de pompe (7) alignée avec ladite direction d'extension principale (90 ou 110) dudit conduit d'aspiration (9) ou dudit conduit de refoulement (11), ledit au moins un joint (8) ayant au moins une partie (80) orientée vers ladite chambre de rinçage (13) de sorte que le flux dudit liquide s'écoulant à l'intérieur de ladite chambre de rinçage (13) lèche ladite partie (80) dudit joint (8).

2. Pompe (1), selon la revendication précédente, **caractérisée en ce qu'**il s'agit d'une pompe à engrenage (1), dans laquelle ledit au moins un élément de pompage rotatif (2, 3) comprend une première roue dentée (21) contrainte de manière rigide audit arbre d'entraînement (4) et une seconde roue dentée (31) engrenée à ladite première roue dentée (21) et adaptée pour être entraînée en rotation par ladite première roue dentée (21).

3. Pompe (1), selon une ou plusieurs des revendications 1 à 2, dans laquelle ladite chambre de rinçage (13) est disposée en amont de ladite chambre de pompage (6), en communication liquide directe avec ledit conduit d'aspiration (9).

4. Pompe (1), selon une ou plusieurs des revendications 1 à 2, dans laquelle ladite chambre de rinçage (13) est disposée en aval de ladite chambre de pompage (6), en communication liquide directe avec ledit conduit de refoulement (11).

5. Pompe (1) selon une ou plusieurs des revendications précédentes, comprenant une bouche d'aspiration (91), en communication liquide avec ledit conduit d'aspiration (9), et une bouche de refoulement (111), en communication liquide avec ledit conduit de refoulement (11), en au moins un point le long du trajet du liquide à l'intérieur de ladite pompe (1), entre ladite bouche d'aspiration (91) et ladite bouche de refoulement (111), ladite pompe (1) comprenant au moins une restriction (15) configurée pour générer une émulsion du liquide passant à travers ladite au moins une restriction (15).

6. Pompe (1), selon la revendication précédente, **caractérisée en ce qu'**il s'agit d'une pompe pour émulsionner le lait et **en ce que** ladite au moins une restriction (15) est configurée pour générer une émulsion de lait.

7. Pompe (1), selon la revendication 5 ou 6, dans laquelle ladite au moins une restriction (15) consiste en un orifice d'émulsion (151, 153) formé à ladite bouche de refoulement (111).

8. Pompe (1), selon la revendication 5 ou 6, dans laquelle ladite au moins une restriction (15) consiste en un conduit de section réduite (152) formé à l'intérieur dudit corps de pompe (7) entre ladite chambre de rinçage (13) et ladite chambre de pompage (6).

9. Pompe (1) selon la revendication 7 ou selon la revendication 8, dans laquelle ledit orifice d'émulsion (151, 153) ou ledit conduit à section réduite (152) a un diamètre inférieur à 1,5 mm, de préférence inférieur à 1,0 mm et de manière davantage préférée à 0,7 mm.

10. Pompe (1), selon une ou plusieurs des revendications 5 à 9, dans laquelle ladite chambre de rinçage (13) est disposée en aval de ladite chambre de pompage (6) et en aval de ladite restriction (15), ledit joint (8) étant un joint basse pression.

11. Pompe (1), selon une ou plusieurs des revendications précédentes, dans laquelle ladite chambre de pompage (6) et ladite chambre de rinçage (13) sont en communication liquide l'une avec l'autre au moyen d'un conduit (70, 152) formé à l'intérieur dudit corps de pompe (7).
